# EUROPÄISCHE PATENTSCHRIFT

(11) **EP 2 372 353 B1**
(45) Veröffentlichungstag und Bekanntmachung des Hinweises auf die Patenterteilung: **30.08.2017**
(21) Anmeldenummer: 11159443.8
(22) Anmeldetag: 23.03.2011
(51) Int. Cl.: G01N 29/02, G01N 29/22

(54) **Messvorrichtung umfassend einen Resonator für akustische und elektrochemische Messungen**
Measuring device comprising a resonator for acoustic and electrochemical measurements
Dispositif de mesure comprenant un résonateur pour des mesures acoustiques et électrochimiques

(30) Priorität: 23.03.2010 DE 102010016103
(43) Veröffentlichungstag der Anmeldung: 05.10.2011
(73) Patentinhaber: Andreas Hettich GmbH & Co. KG, 78532 Tuttlingen (DE)
(72) Erfinder: Gehring, Frank K., 72364 Obernheim (DE)
(74) Vertreter: Puschmann Borchert Bardehle Patentanwälte Partnerschaft mbB

(56) Entgegenhaltungen:
- EP-A2- 0 504 730
- WO-A1-03/089920
- WO-A1-2005/106442
- DD-A5- 296 359
- US-B1- 6 250 140

## Beschreibung

Die Erfindung betrifft eine Messvorrichtung umfassend einen Resonator gemäß dem Oberbegriff des An-spruchs 1.

Aus der DE 10 2006 015 512 A1 sind Messvorrichtungen mit einem Schwingquarz als Resonator bekannt, bei welchen der Schwingquarz austauschbar ist. Diese Messvorrichtungen weisen Messkammern auf, die über einen fluidischen Ein- bzw. Ausgang mit einem Fluid durchströmt werden können. Typischer-weise werden die Schwingungsparameter des Schwingquarzes gemessen, anhand derer die Eigen-schaften eines Fluids bestimmt werden.

Aus der DE 2008 029 213 A1 ist eine Vorrichtung zur Durchführung von Messungen eines Analysenfluids, mit einem Gehäuse, einer im Gehäuse angeordneten Messkammer, zwei Resonatoren, und Leitungen zum Ein- und Ausbringen von Medien für die Messungen in der Messkammer bekannt. Die Resonatoren begrenzen dabei jeweils bereichsweise die Messkammer.

Die WO 2005/106442 A1 und die EP 0 504 730 A2 offenbaren einen Schwingquarz, der zu elektrochemischen Messungen eingesetzt wird.

Im Allgemeinen sind für elektrochemische Messungen grundsätzlich drei Elektroden vorgesehen: eine Arbeitselektrode, eine Gegenelektrode und eine Referenzelektrode. Zur Verwendung einer Schwingquarzmesskammer zur elektrochemischen Messung, ist es notwendig, dass der Schwingquarz als Elektrode wirkt, und zusätzlich zumindest eine Gegenelektrode vorgesehen ist. Nach dem Stand der Technik ist die Gegenelektrode dem Schwingquarz in einer Messkammer gegenüberliegend angeordnet.

Zur genaueren Bestimmung der elektrochemischen Eigenschaften eines Fluids, kann zudem nach dem Stand der Technik an den fluidischen Ein- und Ausgängen eine Referenzelektrode vorgesehen sein.

Die Anordnungen nach dem Stand der Technik haben den Nachteil, dass die Gegenelektroden bei der Verwendung verschlissen werden. Dies hat zur Folge, dass sobald die Gegenelektroden verschlissen sind, die gesamte Messkammer unbrauchbar wird.

Aus der DD 296 360 A5 ist ein elektrochemischer Detektor und aus der DD 296 359 A5 eine Detektoranordnung für Fließsysteme mit austauschbaren Elektroden bekannt.

Die WO 03/0899220 A1 offenbart eine Messeinrichtung bei welcher in einen Messbehälter in den alternativ eine pH-Wert Messeinrichtung und eine Schwingquarzmesseinrichtung nebst GegenElektroden zur elektrochemischen Messung der Probe eingesetzt werden können.

Die US 6,250,140 B1 offenbart ein Verfahren zur Messung einer Fouling-Rate einer Probe mittels eines Schwingquarzes in einer elektrochemischen Messanordnung.

Der Erfindung liegt die Aufgabe zugrunde, eine fluidische Messvorrichtung mit einem Resonator anzugeben, die eine elektrochemische Messung ermöglicht, und die dauerhafte Verwendung der Messkammer gewährleistet.

Die Aufgabe wird durch die kennzeichnenden Merkmale des Anspruchs 1 gelöst.

In bekannter Weise, weist eine Messvorrichtung mit einem Resonator, zur Analyse von Schwingungsparametern eines Resonators Fluidanschlüsse auf, wobei der Resonator ebenfalls als Arbeitselektrode für elektrochemische Messungen verwendbar ist. An die Fluidanschlüsse der Messvorrichtung kann ein Fluidiksystem oder Vorratsbehälter über Fluidanschlussstücke angeschlossen werden. Zudem ist in der Messvorrichtung, die eine Messkammer umfasst, neben dem Schwingquarz als Arbeitselektrode zumindest eine weitere Gegenelektrode vorgesehen.

Erfindungsgemäß sind die Elektroden der Messvorrichtung austauschbar angelegt. Dies setzt zum einen die Austauschbarkeit des Resonators der Messvorrichtung, wobei der Resonator ein Schwingquarz ist, voraus, zum anderen ist zumindest eine weitere austauschbare Elektrode vorgesehen. Dies kann eine Anschlusselektrode sein, die im fluidischen Anschlussbereich austauschbar angeordnet ist.

Die austauschbare Anordnung der Elektroden hat den Vorteil, dass nach Verschleissen der Elektroden, diese bedarfsgerecht auf einfache Weise ausgetauscht werden können, ohne die Funktionsfähigkeit der Messkammer zu beeinträchtigen. Die fluidischen Ein-/und Ausgänge der Messkammer sind in einer im Wesentlichen horizontalen Ebene angeordnet, wobei die Flussrichtung im Allgemeinen eine untergeordnete Rolle spielt, da die erfindungsgemäße Messkammer im Wesentlichen symmetrisch ausgebildet sein kann.
Erfindungsgemäß ist die Messvorrichtung zweiteilig ausgebildet. Der Schwingquarz liegt in dieser Ausführungsform zwischen oberem und unterem Teil. Die fluidischen Anschlüsse sind vorzugsweise in dem oberen Teil integriert. Der obere und untere Teil bilden nach Zusammensetzen die Messkammer, wobei diese nach unten durch den Schwingquarz begrenzt ist.

Der obere und untere Teil sind abnehmbar ausgebildet, und können insbesondere über einen Bajonettverschluss verspannt werden.
Die elektrischen Anschlüsse zu den Elektroden sind in den unteren Teil eingebracht. Die Elektroden in der Messkammer, also die im Fluidanschluss sitzenden Elektroden und auch die Referenzelektrode können über das Unterteil der Messvorrichtung angeschlossen werden. Die Kontaktierung über das Unterteil hat den Vorteil, dass die Bedienung der Messkammer vereinfacht wird, da keine Anschlusskabel am oberen und damit potenziell abnehmbaren Teil angeschlossen sind.

Der Kontakt zwischen den Anschlussstelle und Elektroden wird hergestellt, sobald das Oberteil mit dem Unterteil verbunden ist. Insbesondere sind diese Kontakte als Stifte bzw. Federstifte ausgebildet.

Wird das Oberteil auf das Unterteil gesetzt, drücken die Federstifte an die Anschlusselektroden.

In einer besonders vorteilhaften Ausführungsform, kann die Elektrode rohrförmig ausgebildet sein und zumindest teilweise den Fluidkanal für die Führung des Fluids bilden. Besonders vorteilhaft wirkt sich die Ausgestaltung der Elektrode als Fluidkanal bei der Verwendung der Anschlusselektrode als Gegenelektrode aus, da diese eine besonders große Elektrodenfläche aufweist und damit nur eine geringe Stromdichte zulässt.

In vorteilhafter Weise, kann die Elektrode in eine Hülse integriert sein, die in den Fluidanschluss eingebracht wird. Dies erleichtert das Handling beim Austausch der Elektroden, da die Hülse deutlich größer ausgebildet sein kann, als die aufgenommene Elektrode. Die Hülse kann vorzugsweise aus PEEK ausgebildet sein. Darüber hinaus kann eine PEEK-Hülse auch ohne Elektrode ausgebildet sein, was nicht nur den Austausch verschlissener Elektroden ermöglicht, sondern wodurch auch Hülsen ohne Elektroden einsetzbar sind. Durch das Einsetzen elektrodenfreier, und somit kostengünstigerer Hülsen kann, sofern Messungen durchgeführt werden sollen, welche die Elektroden nicht benötigen, eine Kontamination der Elektroden vermieden werden.

Zudem kann die Hülse derart ausgestaltet sein, dass sie das Fluidanschlussstück des anzuschließenden Fluidiksystems oder Versorgungsbehälters aufnehmen und im Wesentlichen leckagefrei festlegen kann. Insbesondere wird die Hülse mittels einer Überwurfmutter, die in ein Außengewinde am Fluidanschluss eingreift, an diesem Fluidanschluss festgelegt. Dies bietet eine einfache und schnelle Möglichkeit eine eingesteckte Hülse fluidisch dicht zu arretieren.

Dies ermöglicht eine multifunktionale Nutzung der Messkammer, in welche die Elektroden im Bedarfsfall speziell für elektrochemische Messungen eingesetzt werden können. Für Messungen, bei welchen keine elektrochemische Analyse notwendig ist, werden die Elektroden somit nicht belastet.

Wird die eingesetzte Hülse nicht verwendet, kann in einer weiteren Ausführungsform das Anschlussstück direkt in die fluidischen Ein- bzw. Ausgangsanschlüsse eingeschraubt werden.

Insbesondere sind am fluidischen Ein- und Ausgang jeweils eine Gegenelektrode vorgesehen. Durch eine, mit Hilfe dieser Elektroden, parallel zur Schwingquarz-Messung durchgeführte elektrochemische Messung, kann mit dieser Anordnung beispielsweise eine Prozesskontrolle durchgeführt werden. Beispielsweise kommt es zu unterschiedlichen Signalen zwischen Ein- und Ausgang, wenn eine Luftblase asymmetrisch in der Kammer eingeschlossen ist.

Werden beispielsweise sequenziell unterschiedliche Fluide in den Messkanal eingeleitet, kommt es zu Mischfluiden, deren graduelle Konzentration vom Einlass bis zum Auslass detektiert werden kann. Entsprechend kann über die Elektroden die elektrische Änderung gemessen werden, die durch den Verlauf der Konzentrationsänderung des jeweiligen Fluids zum Vorausgehenden beeinflusst wird.

Zudem kann im Oberteil eine Vertikalöffnung vorgesehen sein, die vertikal über dem Resonator liegt, und die das Einbringen eines Stempels ermöglicht, wobei dann die untere Stempelfläche die obere Begrenzung der Messkammer bildet. In vorteilhafter Weise kann dieser als Sichtstempel durchsichtig ausgeführt werden, was eine Beobachtung des Prozesses ermöglicht.

Vorzugsweise kann anstelle des Sichtstempels auch ein Elektrodenstempel in die Vertikalöffnung eingebracht werden. Der Elektrodenstempel bildet vorzugsweise die Referenzelektrode. Das variable Einsetzen des Elektrodenstempels in die Vertikalöffnung der Messvorrichtung hat den Vorteil, dass diese gut zu-gänglich ist, und eine Anpassung verschiedener Referenzelektroden für unterschiedliche Prozessfluide ermöglicht. Beispielsweise kann eine Ag / AgCl oder eine Pt / Na Cl- Referenzelektrode eingesetzt werden. Die Referenzelektrode ist in ihrem Randbereich derart angepasst, dass sie einen möglichst ungestörten Fluss durch die Messkammer zulässt.

Insbesondere liegt der Elektrodenstempel zwischen den Fluidkanälen der fluidischen Ein- und Ausgänge. Der Elektrodenstempel ist im Übergang zu den Fluidkanälen in seiner Formgebung diesen angepasst, um einen weitgehend ungestörten Fluss zu ermöglichen und kein Totvolumen im Übergangsbereich zwischen den Fluidanschlüssen und der Messkammer zu generieren.

Ein weiterer Vorteil durch die Austauschbarkeit der Referenzelektrode ergibt sich dadurch, dass die Referenzelektrode an ihrem der Messkammer zugewandten Ende eine Fritte aufweisen kann, die ständig feucht gehalten werden muss, da diese sonst porös und folglich unbrauchbar wird. Durch die Entnehmbarkeit der Referenzelektrode, muss die Messvorrichtung nicht ständig in einem feuchten Umfeld betrieben werden, sondern die Referenzelektrode kann separat entnommen und unabhängig von der Messvorrichtung in einer feuchten oder nassen Umgebung aufbewahrt werden.

In besonders vorteilhafter Weise sind die Gegenelektroden aus Platin ausgebildet. Platin ist inert und entsprechend biokompatibel, wodurch vielseitige Fluide verwendet werden können.

Zudem kann im unteren Teil ein Heiz-Kühl-Element angeordnet sein, wodurch die Messkammer temperierbar ist. Der Schwingquarz, der mit seinen zwei Kontakten, die an der Unterseite des Schwingquarzes angeordnet sind, werden zu Anschlussstellen am unteren Teil der Messvorrichtung verbunden. Somit stellt die Messvorrichtung Schnittstellen sowohl zur Signal- bzw. Datenausgabe zur Verfügung als auch zur Anregung des Schwingquarzes.

Indem der Schwingquarz an seiner Messoberfläche mit einer Folie verklebt ist, kann dieser Spannungsarm abgedichtet werden.

In einer weiteren vorteilhaften Ausführungsform kann an die Anschlussstellen eine Flüssigkeitsaufnahmevorrichtung angeschlossen werden. Die Flüssigkeitsaufnahmevorrichtungen ermöglichen eine hydrostatische Messung, sobald die Flüssigkeitsaufnahmevorrichtungen mit dem Probenfluid gefüllt sind.

Im Folgenden wird die Erfindung anhand einer Zeichnung näher erläutert. Hierbei gehen aus der Zeichnung und ihrer Beschreibung weitere erfindungswesentliche Merkmale und Vorteile der Erfindung hervor. In der Zeichnung werden die in der Bezugszeichenliste aufgeführten Bezugszeichen verwendet. In der Zeichnung bedeutet:
- Fig. 1: einen Schnitt durch die Messkammer nach einem Ausführungsbeispiel der Erfindung, und
- Fig. 2: eine zusammengesetzte Schwingquarzmesskammer.

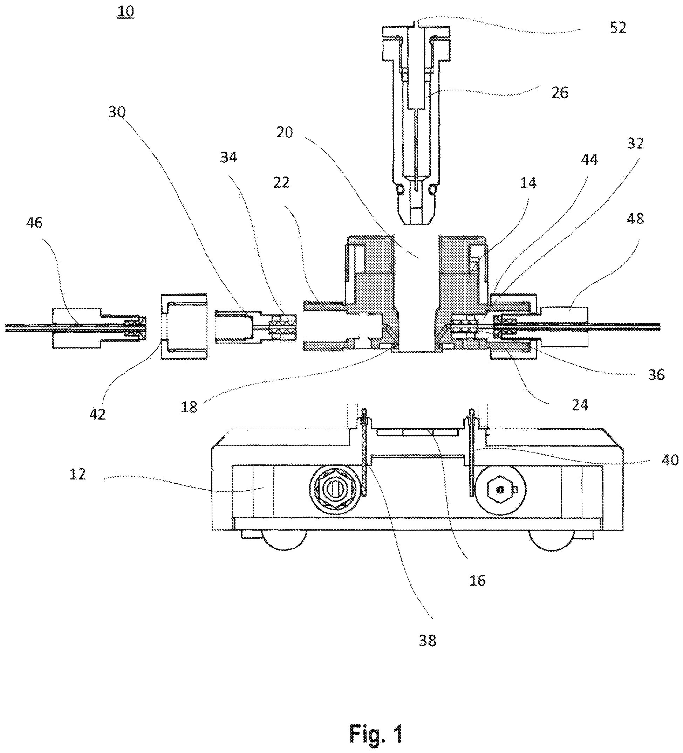

Fig.1 zeigt eine Messvorrichtung 10 im Querschnitt. Die Messvorrichtung 10 umfasst ein Unterteil 12 und ein Oberteil 14. Das Oberteil 14 wird mittels eines Bajonettverschlusses an das Unterteil 12 fixiert. Durch die Verbindung von Ober-14 und Unterteil 12 wird ein in das Unterteil eingesetzter Schwingquarz 16 festgelegt. Im Übergang zwischen Oberteil 14 und Schwingquarz 16 ist eine Dichtung 18 vorgesehen, welche die Messkammer 28 seitlich begrenzt. Das Oberteil 14 weist zudem eine Öffnung 20 in vertikaler Richtung sowie eine Anschlussstelle 22 und 24 in horizontaler Richtung auf. Die Anschlussstellen 22, 24 in horizontaler Richtung dienen im Wesentlichen der fluidischen Zu- und Ableitung zur Messkammer. Die Öffnung 20 bietet die Möglichkeit, einen Verschlussstopfen, oder eine Referenzelektrode 26 welcher die Messkammer 28 nach oben begrenzt, aufzunehmen.

Im Sinne der Erfindung sind in den Anschlussstellen 22, 24 Hülsen 30, 32 aufgenommen. In den Hülsen 30, 32 sind am vorderen Ende Elektroden 34, 36 integriert. Diese Elektroden sind rohrförmig ausgebildet und bilden im vorderen Teil der Hülse 30, 52 den Fluidkanal. Die Elektroden 34, 36 sind für eine elektrochemische Messung als Gegenelektroden vorgesehen. Zur Kontaktierung dieser Elektroden 34, 36, sind im Unterteil 12 Federstifte integriert, welche die Elektroden 34, 36 durch eine Aussparung in der Hülse 30,32 bei Abschließen des Bajonettverschlusses kontaktieren. Die Federstifte 38, 40 sind über elektrische Leiter mit Anschlüssen am Gehäuse verbunden. Dies ermöglicht einen einfachen Spannungsabgriff an den Gegenelektroden 34, 36.

Die Hülsen 30, 32 sind durch Überwurfmuttern 42, 44, die in ein Außengewinde an der Anschlussstelle 22, 24 eingreifen, fluidisch dicht an die Messkammer gekoppelt. Zudem weist die Hülse 30, 32 ein Innengewinde auf, das mit den Anschlussstücken 46, 48 korrespondiert. Die Anschlussstücke 46, 48 werden in die Hülsen 30, 32 eingeschraubt und stellen so die Verbindung zur Flüssigkeitsversorgung her.

Die Oberfläche des Schwingquarzes 16 ist mit einer elektrisch leitfähigen Schicht 50 versehen. Diese ist vorzugsweise aus Platin ausgebildet. Mittels dieser Schicht, stellt der Schwingquarz die Arbeitselektrode für eine elektrochemische Messung dar.

Die Referenzelektrode 26 ist in die Öffnung 20 des Oberteils 14 eingebracht und ist als Referenzelektrode ausgebildet. Die Referenzelektrode weist einen in Kochsalzlösung liegenden Leiter 52 auf. Die Koch-salzlösung ist über eine semi-permeable Membran von der Messkammer abgetrennt.

Diese Anordnung hat den Vorteil, dass sowohl die Referenzelektrode als auch die Gegenelektrode 34, 36 mit ihren Hülsen 30, 32 ausgetauscht werden kann, sobald diese verschlissen sind. Dies ist auf einfache Weise möglich, indem die Überwurfmutter 42, 44 von der Anschlussstelle 22, 24 entfernt wird. Die Hülse kann dann einfach entnommen werden und gegen eine neue getauscht werden. Entsprechend muss nicht die gesamte Messkammer ausgetauscht werden, nur weil die Gegenelektroden verschlissen sind.

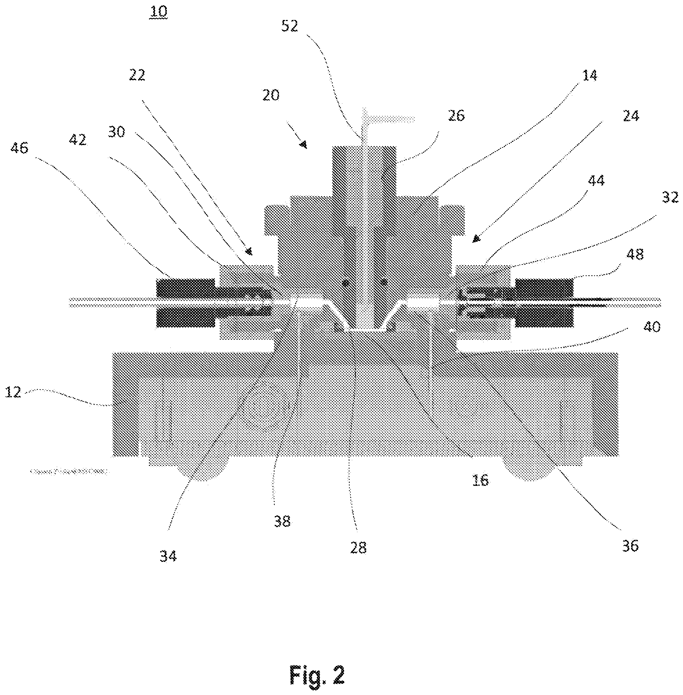

Fig. 2 zeigt die Schwingquarz-Messkammer 10 in einem angeschlossenen Zustand. In dieser Ausgestaltung bildet der Schwingquarz die Unterseite der Messkammer 28, wohingegen die Referenzelektrode 26 mit ihrer Membran, die Messkammer 28 nach oben begrenzt. Seitlich wird der Messraum durch den Dichtring 18 begrenzt. Die Federstifte 38, 40 kontaktieren, sobald Ober- und Unterteil 12, 14 zusammengesetzt sind, die Gegenelektroden 34, 36 in den Hülsen.

### Bezugszeichenliste

- 12: Unterteil
- 14: Oberteil
- 16: Schwingquarz
- 18: Dichtring
- 20: vertikale Öffnung
- 22: horizontale Anschlussstelle
- 24: vertikale Anschlussstelle
- 26: Referenzelektrode
- 28: Messkammer
- 30: Hülse
- 32: Hülse
- 34: Gegenelektrode
- 36: Gegenelektrode
- 38: Federstift
- 40: Federstift
- 42: Überwurfmutter
- 44: Überwurfmutter
- 46: Anschlussstück
- 48: Anschlussstück
- 50: Metallbeschichtung

## Patentansprüche

1. Messvorrichtung umfassend zumindest einen Schwingquarz (16), umfassend eine Messkammer (28) mit Fluidanschlüssen (22, 24) für zumindest einen fluidischen Eingang (22) und einen fluidischen Ausgang (24), wobei die Messkammer (28) nach unten durch den Schwingquarz (16) begrenzt wird, zudem ist die Oberfläche des Schwingquarzes(16), die in Kontakt mit dem zu messenden Fluid steht, elektrisch leitfähig ausgebildet, und stellt die Arbeitselektrode für eine elektrochemische Messung dar, und ferner ist in der Messkammer (28) zumindest eine zusätzliche, austauschbare Gegenelektrode (34, 36, 26) vorgesehen, **dadurch gekennzeichnet, dass** der Schwingquarz (16) mit der Arbeitselektrode austauschbar ist, wobei die Messvorrichtung (10) zweiteilig ausgebildet ist und elektrische Anschlüsse (38, 40) und Gegenelektroden (34, 36) umfasst, wobei sich die Fluidanschlüsse (22, 24) und die Gegenelektroden (34, 36) im abnehmbaren oberen Teil (14) befinden und die elektrischen Anschlüsse (38, 40) für diese sich im unteren Teil (12) befinden, und die Gegenelektroden (34, 36) automatisch bei Aufsetzen des oberen Teils (14) kontaktiert werden, wobei die elektrischen Anschlüsse einen Stiftkontakt (38, 40), insbesondere einen Federstift, umfassen, der im Übergang zwischen elektrischem Anschlusskabel und Gegenelektroden (34, 36) vorgesehen ist.

2. Messvorrichtung nach Anspruch 1, **dadurch gekennzeichnet, dass** die Elektrode (34, 36, 26) am fluidischen Ein- und / oder Ausgang (22, 24) im Übergang zur Messkammer (28) angeordnet ist.

3. Messvorrichtung nach Anspruch 1 oder 2, **dadurch gekennzeichnet, dass** zumindest eine Elektrode als Gegenelektroden (34, 36) wirkt und rohrförmig ausgebildet ist, wobei die Elektrode (34, 36) zumindest teilweise einen Fluidkanal für das zu messende Fluid bildet.

4. Messvorrichtung nach einem der vorangehenden Ansprüche, **dadurch gekennzeichnet, dass** die Elektroden (34, 36) in einer Hülse (30, 32) angeordnet sind, welche die Aufnahme eines Fluidanschlussstücks ermöglicht.

5. Messvorrichtung nach Anspruch 4, **dadurch gekennzeichnet, dass** die Hülse (30, 32) mittels einer Überwurfmutter (42, 44) am Fluidanschluss (22, 24) fixierbar ist.

6. Messvorrichtung nach Anspruch 1, **dadurch gekennzeichnet, dass** eine vertikale Öffnung (20) gegenüber der Arbeitselektrode des eingesetzten Resonators (16) vorgesehen ist, in welche eine Referenzelektrode (26) einsetzbar ist, und welche mit ihrer Kontaktfläche die Messkammer (28) begrenzt.

7. Messvorrichtung nach einem der vorangehenden Ansprüche, **dadurch gekennzeichnet, dass** der Kontakt durch Zusammenfügen von Ober- und Unterteil (12, 14) hergestellt wird.

8. Messvorrichtung nach einem der vorangehenden Ansprüche, **dadurch gekennzeichnet, dass** im Unterteil (12) eine Vorrichtung zur Temperierung der Messkammer (28) vorgesehen ist.

## Claims

1. Measuring device having at least one crystal oscillator (16), which device comprises a measuring chamber (28) with fluid ports (22, 24) for at least one fluid inlet (22) and one fluid outlet (24), said measuring chamber (28) being delimited at the bottom by the crystal oscillator (16), in which the surface of the crystal oscillator (16), which surface contacts the fluid to be measured, is furthermore designed to be electrically conductive and constitutes the working electrode for electrochemical measurements, and at least one additional exchangeable counter electrode (34, 36, 26) is furthermore provided in the measuring chamber, **characterized in that** said crystal oscillator (16) can be exchanged for the working electrode, with the measuring device (10) being of a two-part design and comprising electrical connections (38, 40) and counter electrodes (34, 36), with the fluid ports (22, 24) and the counter electrodes (34, 36) being located in the detachable top part (14) and the electrical connections (38, 40) for these being located in the bottom part (12), and the counter electrodes (34, 36) being contacted automatically as the top part (14) is put in place, with the electrical connections comprising a pin contact (38, 40), in particular a spring pin, which is located in the transition zone between the electrical connection cable and the counter electrodes (34, 36).

2. Measuring device according to claim 1, **characterized in that** the electrode (34, 36, 26) is disposed at the fluid inlet and/or outlet (22, 24) at the transition to the measuring chamber (28).

3. Measuring device according to one of claims 1 or 2, **characterized in that** at least one electrode acts as a counter electrode (34, 36) and is of a tubular design, which electrode (34, 36) at least partially forms a fluid channel for the fluid to be measured.

4. Measuring device according to any one of the preceding claims, **characterized in that** the electrodes (34, 36) are disposed in a sleeve (30, 32) which allows a fluid connector piece to be received therein.

5. Measuring device according to claim 4, **characterized in that** said sleeve (30, 32) can be securely mounted on the fluid port (22, 24) by means of a cap nut (42, 44).

6. Measuring device according to claim 1, **characterized in that** a vertical aperture (20) is provided opposite the working electrode of the inserted resonator (16) into which aperture (20) a reference electrode (26) can be introduced, with the contact surface of said aperture (20 delimiting the measuring chamber (28).

7. Measuring device according to any one of the preceding claims, **characterized in that** contact is made by putting the top part and the bottom part (12, 14) onto each other.

8. Measuring device according to any one of the preceding claims, **characterized in that** a device for controlling the temperature of the measuring chamber (28) is provided in the bottom part (12).

## Revendications

1. Dispositif de mesure comprenant au moins un cristal osciliateur(16), comprenant un compartiment de mesure (28) avec des raccords de fluide (22, 24) pour au moins une entrée fluidique (22) et une sortie fluidique (24), le compartiment de mesure (28) étant délimité en bas par le cristal oscillateur(16), la surface du cristal oscillateur(16) en contact avec le fluide à mesurer étant en outre prévue électriquement conductrice et constituant l'électrode de travail pour une mesure électrochimique, et au moins une contre-électrode (34, 36, 26) remplaçable complémentaire étant en outre prévue dans le compartiment de mesure (28), **caractérisé en ce que** le cristal oscillateur(16) est remplaçable par l'électrode de travail, le dispositif de mesure (10) étant réalisé en deux parties et comprenant des connexions électriques (38,40) et des contre-électrodes (34, 36), les raccords de fluide (22, 24) et les contre-électrodes (34, 36) se trouvant dans la partie supérieure amovible (14) et les connexions électriques (38, 40) pour celles-ci se trouvant dans la partie inférieure (12), et les contre-électrodes (34, 36) étant automatiquement contactées à la mise en place de la partie supérieure (14), les connexions électriques comprenant une broche de contact (38, 40), en particulier une broche élastique, prévue au niveau de la transition entre un câble de connexion électrique et les contre-électrodes (34, 36).

2. Dispositif de mesure selon la revendication 1, **caractérisé en ce que** l'électrode (34, 36, 26) est disposée à l'entrée et/ou à la sortie fluidiques (22, 24) au niveau de la transition vers le compartiment de mesure (28).

3. Dispositif de mesure selon la revendication 1 ou la revendication 2, **caractérisé en ce qu'**au moins une électrode agit comme contre-électrode (34, 36) et est réalisée avec une forme tubulaire, l'électrode (34, 36) formant au moins en partie un canal fluidique pour le fluide à mesurer.

4. Dispositif de mesure selon l'une des revendications précédentes, **caractérisé en ce que** les électrodes (34, 36) sont disposées dans un manchon (30, 32) qui permet la réception d'un raccord de fluide.

5. Dispositif de mesure selon la revendication 4, **caractérisé en ce que** le manchon (30, 32) peut être fixé sur le raccord de fluide (22, 24) au moyen d'un écrou de raccordement (42, 44).

6. Dispositif de mesure selon la revendication 1, **caractérisé en ce qu'**une ouverture verticale (20) est prévue vis-à-vis de l'électrode de travail du résonateur (16) mis en place, dans laquelle peut être logée une électrode de référence (26), et qui délimite le compartiment de mesure (28) par sa surface de contact.

7. Dispositif de mesure selon l'une des revendications précédentes, **caractérisé en ce que** le contact est réalisé par assemblage de la partie supérieure avec la partie inférieure (12, 14).

8. Dispositif de mesure selon l'une des revendications précédentes, **caractérisé en ce qu'**un dispositif de thermorégulation du compartiment de mesure (28) est prévu dans la partie inférieure (12).
